# FASCICULE DE BREVET EUROPEEN

(11) **EP 1 265 331 B1**
(45) Date de publication et mention de la délivrance du brevet: **26.02.2014**
(21) Numéro de dépôt: 02291373.5
(22) Date de dépôt: 04.06.2002
(51) Int. Cl.: H02G 3/04

(54) **Conduit de câblage sécable**
Abtrennbarer Kabelkanal
Divisible cable duct

(30) Priorité: 06.06.2001 FR 0107378
(43) Date de publication de la demande: 11.12.2002
(73) Titulaire: PLANET WATTOHM, 60300 Senlis (FR)
(72) Inventeur: Perrard, Stéphane, 95330 Domont (FR); Popescu, Dragos, 93110 Rosny-Sous-Bois (FR); Boulay, Olivier, 60580 Coye la Foret (FR); Laigle, Jean, 93700 Drancy (FR); Gengembre, Yvan, 94220 Charenton le Pont (FR)
(74) Mandataire: Santarelli

(56) Documents cités:
- DE-U- 1 891 845
- FR-A- 2 777 129
- FR-A- 2 777 130

## Description

La présente invention concerne un conduit de câblage électrique du type de ceux mis en oeuvre, par exemple, dans les armoires électriques, pour le cheminement et la protection de câbles électriques.

Plus particulièrement, l'invention concerne un conduit de câblage comportant, suivant une section transversale en forme de U, un fond et deux ailes latérales, au moins une des deux ailes latérales comprenant un rebord rattaché au fond, et au moins une languette s'élevant à partir du rebord, ledit rebord comportant une zone de moindre résistance.

De façon connue, cette zone de moindre résistance permet de faciliter la découpe du conduit de câblage, notamment pour satisfaire à ses conditions pratiques d'utilisation.

En pratique, des zones de moindre résistance sont situées de place en place le long du conduit de câblage, et permettent ainsi à l'installateur de découper le conduit selon une longueur voulue.

On connaît déjà du document FR 2 777 129 appartenant à la Demanderesse, un conduit de câblage du type précité présentant, à l'aplomb de chaque ouverture définie entre deux languettes successives, un orifice situé entre cette ouverture et le fond du conduit de câblage.

Un tel conduit de câblage nécessite cependant, pour son découpage, un outil adapté à briser la bride de matière comprise entre l'orifice et l'ouverture correspondante.

Cette bride devant être suffisamment large pour assurer une certaine rigidité audit conduit de câblage, la découpe de celle-ci est relativement difficile.

Par rapport à l'état de la technique précité, la présente invention propose un conduit de câblage rigide ne nécessitant pas d'outil spécifique pour sa découpe.

Plus particulièrement, l'invention propose un conduit de câblage tel que défini en introduction, caractérisé en ce que la zone de moindre résistance du rebord s'étend sensiblement au droit de la languette et au moins en partie à proximité de la jonction entre le rebord et la languette.

La languette permet ainsi de rigidifier le conduit de câblage, au niveau de la zone de moindre résistance du rebord. La découpe du conduit de câblage s'effectue donc en deux opérations successives, la première opération consistant à casser la languette, au niveau de sa jonction avec le rebord de l'aile latérale. Cette première opération fragilise le conduit de câblage au niveau de l'ancienne position de la languette. Il devient alors aisé, lors d'une deuxième opération, de découper le conduit de câblage à ce niveau.

Selon une caractéristique du conduit de câblage conforme à l'invention, la zone de moindre résistance du rebord comporte un évidement réalisé sur une partie au moins de l'épaisseur dudit rebord.

Cet évidement permet de faciliter le découpage du conduit de câblage au niveau de ce rebord.

Préférentiellement, la zone de moindre résistance du rebord comporte une gorge s'étendant en direction du fond dudit conduit de câblage, sensiblement perpendiculairement à ce fond.

Selon un autre mode de réalisation du conduit de câblage conforme à l'invention, la zone de moindre résistance du rebord comporte une ligne de perforations espacées les unes des autres, cette ligne s'étendant en direction du fond du conduit de câblage et perpendiculairement à ce dernier.

Dans un mode préféré de réalisation du conduit de câblage selon l'invention, le fond du conduit de câblage comporte, transversalement, et sensiblement au droit de la languette, une zone de moindre résistance s'étendant sur au moins une partie de la largeur de ce fond.

Selon un mode préféré de réalisation du conduit de câblage conforme à l'invention, la zone de moindre résistance du fond comporte une rainure.

Cette rainure facilite ainsi la découpe du fond du conduit de câblage.

Selon un autre mode de réalisation du conduit de câblage conforme à l'invention, la zone de moindre résistance du fond comporte un alignement de perforations espacées les unes des autres.

Préférentiellement, la zone de moindre résistance du fond rejoint la zone de moindre résistance du rebord.

Selon un mode préféré de réalisation du conduit de câblage conforme à l'invention, la zone de moindre résistance du rebord se prolonge sur la languette de l'aile latérale.

Ce mode de réalisation particulier permet de faciliter la découpe de la languette, lors de la première opération précitée.

Selon une autre caractéristique particulière du conduit de câblage conforme à l'invention, la zone de moindre résistance du rebord comporte un découpage au contour fermé et réalisé en partie sur le rebord de l'aile latérale et en partie sur la languette de l'aile latérale.

La partie du découpage réalisé sur la languette permet donc de faciliter le découpage de celle-ci lors de la première opération ; la partie du découpage, située sur le rebord de l'aile latérale, facilite, quant à elle, la découpe de ce rebord lors de la deuxième opération.

Selon une autre caractéristique particulière du conduit de câblage conforme à l'invention, le contour de ce découpage est en forme de losange, une première diagonale de ce losange étant sensiblement alignée avec une médiane de la languette de l'aile latérale, la deuxième diagonale de ce losange étant sensiblement alignée avec un bord du rebord de l'aile latérale.

Un découpage avec un tel contour en forme de losange permet, simplement, de réaliser les deux fonctions précitées, à savoir la fragilisation de la languette de l'aile latérale et la fragilisation du rebord de cette aile, tout en assurant une bonne rigidité du conduit de câblage lorsque la languette est présente.

Selon une autre caractéristique particulière du conduit de câblage conforme à l'invention, la languette comporte, sensiblement dans le prolongement d'un bord du rebord de l'aile latérale, une gorge reliant le découpage réalisé en partie sur le rebord et en partie sur la languette, et une arête définie par l'intersection de la languette avec le rebord de l'aile latérale.

Cette gorge permet de faciliter encore le découpage de la languette au niveau de son intersection avec ledit rebord.

Selon une autre caractéristique particulière du conduit de câblage conforme à l'invention, la languette comporte un découpage en biseau au niveau de son rattachement avec le rebord de l'aile latérale.

Cette caractéristique particulière permet de faciliter le découpage de la languette.

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1 est une vue partielle en perspective d'un conduit de câblage selon l'invention ;
- la figure 2 est une vue partielle en coupe transversale d'une variante de réalisation, suivant le plan de coupe II-II de la figure 1 ;
- les figures 3 à 6 sont des vues partielles en perspective de différentes variantes de réalisation du conduit de câblage suivant l'invention ;
- la figure 7 représente un exemple qui n'est pas couvert par les revendications;
- la figure 8 est une vue en coupe transversale analogue à celle de la figure 2 pour une variante de réalisation du conduit de câblage selon l'invention.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

De façon connue en soi, le conduit de câblage 10 selon l'invention comporte, suivant une section transversale en forme de U, un fond 12 et deux ailes latérales 14, au moins une des deux ailes latérales 14 comprenant un rebord 16 rattaché au fond 12.

Préférentiellement, et comme représenté sur les figures, le rebord 16 est rattaché perpendiculairement au fond 12.

De façon connue en soi, ce rebord 16 présente un bord 18 préférentiellement droit et parallèle au fond 12, duquel s'élève au moins une languette 20.

En pratique, les deux ailes latérales 14 sont identiques, chacune d'entre elles comprenant, de place en place, des languettes 20 s'élevant à partir de son rebord 16.

Bien entendu, selon une variante non représentée, les deux ailes latérales du conduit de câblage peuvent être différentes, en particulier elles peuvent présenter des hauteurs ou des formes différentes.

Ces languettes 20 définissent, deux à deux et conjointement, des ouvertures 22 pour le passage de câbles électriques non représentés.

Préférentiellement, et comme représenté sur ces figures, les languettes 20 sont établies à un pas régulier et sont en correspondance les unes avec les autres d'une aile latérale 14 à l'autre.

Selon l'invention, le rebord 16 d'au moins une des deux ailes latérales 14 comporte une zone de moindre résistance qui s'étend sensiblement au droit d'une languette 20, et au moins en partie à proximité de la jonction entre cette languette 20 et le rebord 16 de cette aile latérale 14.

En pratique, la zone de moindre résistance du rebord 16 comporte un évidement 24 réalisé sur une partie au moins de l'épaisseur de ce rebord 16.

Cet évidement 24 peut être réalisé sur une face interne 16a ou sur une face externe 16b du rebord 16.

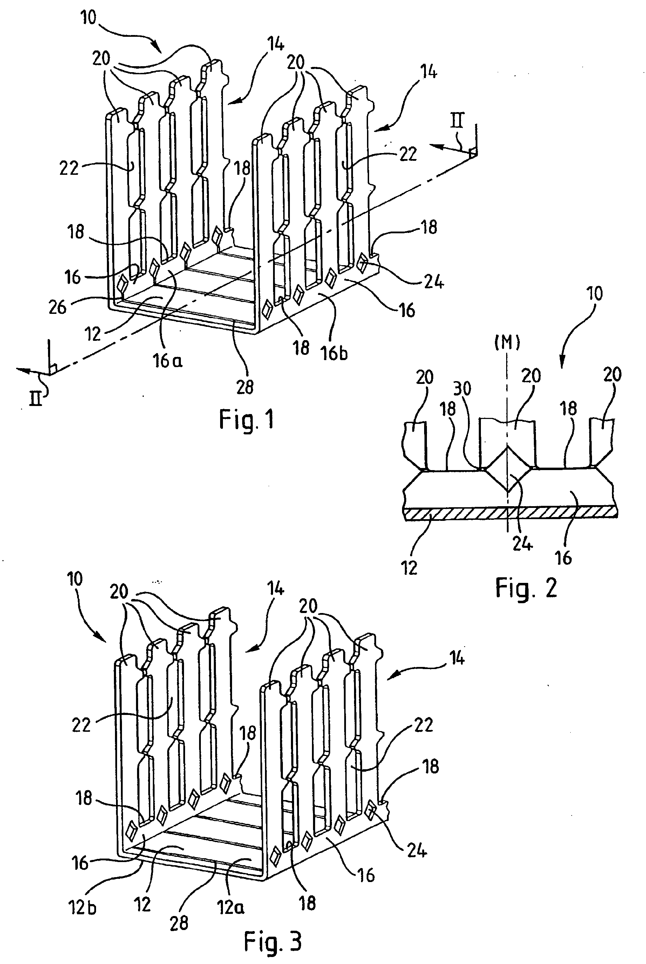

Dans le mode préféré de réalisation représenté sur la figure 1, cet évidement 24 est débouchant.

Préférentiellement, et comme représenté, par exemple, sur la figure 1, la zone de moindre résistance du rebord 16 comporte une gorge 26 s'étendant en direction du fond 12 du conduit de câblage 10 et sensiblement perpendiculairement à ce fond 12.

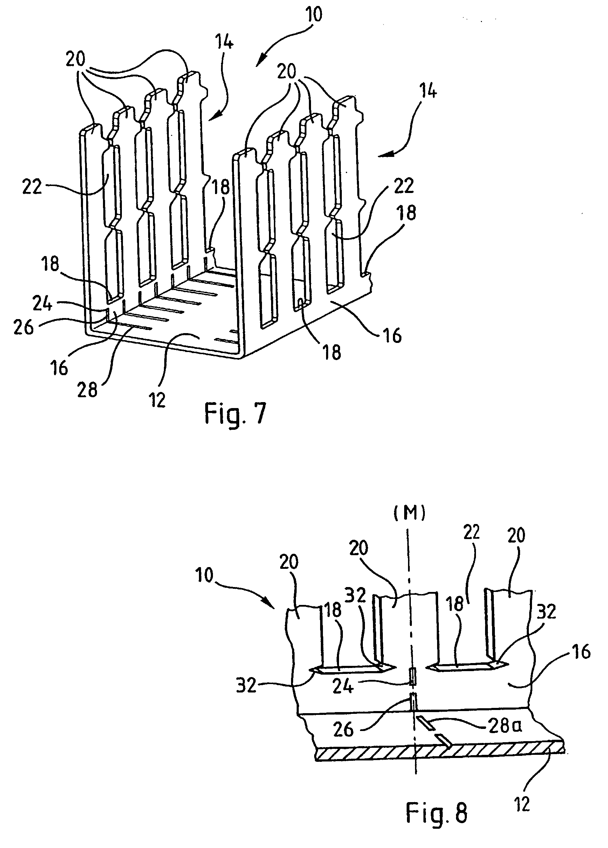

En variante, et comme représenté sur la figure 8, la zone de moindre résistance du rebord 16 comporte une ligne de perforations 24, 26 espacées les unes des autres, cette ligne s'étendant en direction du fond 12 et sensiblement perpendiculairement à ce dernier.

Bien entendu, ces perforations 24, 26 peuvent être débouchantes ou non, plus ou moins longues et plus ou moins espacées.

Ces perforations peuvent être réalisées sur la face interne 16a ou sur la face externe 16b du rebord 16.

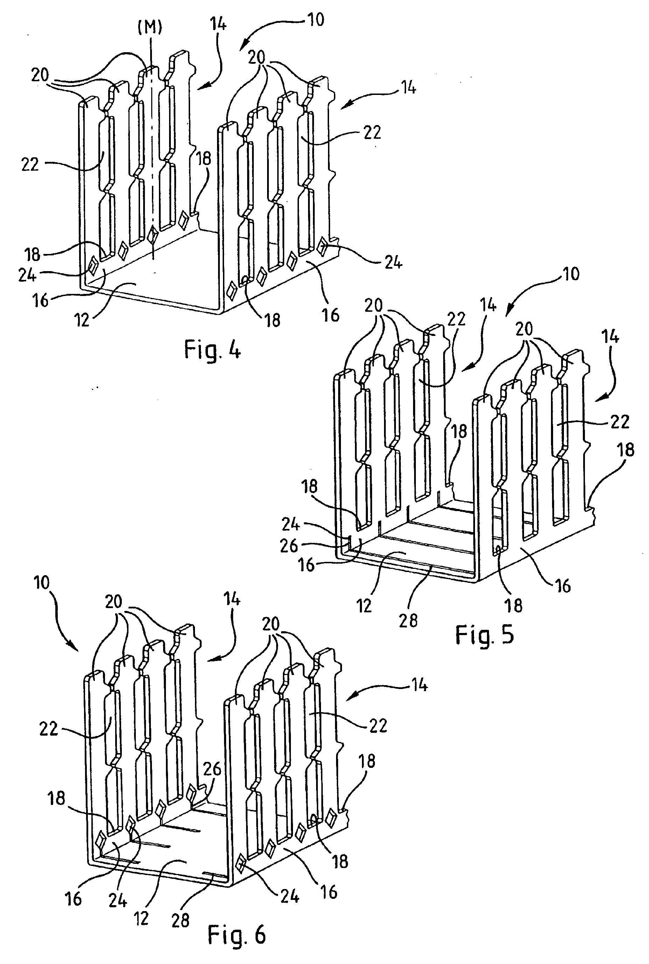

Dans les modes de réalisation du conduit de câblage représentés sur la figure 5, la zone de moindre résistance est constituée par une gorge 24 non débouchante prolongée, par la gorge 26, jusqu'au fond 12 du conduit de câblage 10, perpendiculairement à ce fond 12.

La gorge 26 peut être réalisée sur la face interne 16a ou sur la face externe 16b du rebord 16.

Préférentiellement, le fond 12 du conduit de câblage 10 comporte, transversalement et sensiblement au droit d'une languette 20, une zone de moindre résistance s'étendant sur au moins une partie de la largeur du fond 12.

Dans le mode de réalisation préféré représenté sur la figure 1, la zone de moindre résistance du fond 12 comporte une rainure 28, cette rainure pouvant être réalisée sur une face interne 12a ou sur une face externe 12b du fond 12.

En pratique, la rainure 28 s'étend sur toute la largeur du fond 12, même si cela n'est pas nécessaire, comme dans les modes de réalisation du conduit de câblage 10 représentés sur la figure 6.

En variante, et comme représenté à la figure 8, la zone de moindre résistance du fond 12 comporte un alignement de perforations 28a espacées les unes des autres.

Bien entendu, ces perforations 28a peuvent être débouchantes ou non, plus ou moins longues et plus ou moins espacées.

Ces perforations peuvent être réalisées sur la face interne 12a ou sur la face externe 12b du fond 12.

Préférentiellement, la zone de moindre résistance du fond 12 rejoint la zone de moindre résistance du rebord 16 au niveau de l'intersection entre le fond 12 et le rebord 16 de l'aile latérale 14.

Ainsi, en référence à la figure 1, la rainure 28 rejoint la gorge 26.

En pratique, la rainure 28 réalisée sur le fond 12 du conduit de câblage 10, et la gorge 26 réalisée sur le rebord 16 de l'aile latérale 14, sont dans un même plan perpendiculaire au fond 12 du conduit de câblage 10.

Dans un mode de réalisation représenté sur les figures 1 à 4 ainsi que sur la figure 6, la zone de moindre résistance du rebord 16 se prolonge sur la languette 20.

Ceci permet de faciliter la découpe de la languette 20.

En pratique, la zone de moindre résistance du rebord 16 est alors constituée d'un découpage au contour fermé, ce découpage étant réalisé en partie sur le rebord 16 et en partie sur la languette 20.

Préférentiellement, le contour de ce découpage est en forme de losange, une diagonale de ce losange étant sensiblement alignée avec une médiane M de la languette (représentée sur les figures 2, 4 et 8), la deuxième diagonale de ce losange étant sensiblement alignée avec le bord 18 du rebord 16 de l'aile latérale.

Bien entendu, en variante non représentée ici, plusieurs types de découpage, par exemple en forme de parallélogramme, peuvent être envisagés.

En pratique, les découpages réalisés au niveau de chaque languette 20 sont identiques.

Dans le mode de réalisation représenté sur la figure 2, la languette 20 comporte, sensiblement dans le prolongement du bord 18 du rebord 16 de l'aile latérale 14, une gorge 30 reliant le découpage et une arête d'intersection de cette languette 20 avec ce rebord 16.

Cette gorge 30 facilite encore le découpage de la languette 20 au niveau de son rattachement avec le rebord 16.

Dans le mode de réalisation représenté sur la figure 8, la languette 20 comporte un découpage en biseau 32 au niveau de son rattachement avec le rebord 16 de l'aile latérale 14.

En pratique, la languette 20 comporte deux découpages en biseau placés symétriquement par rapport à la médiane M de cette languette 20.

Le découpage en biseau 32 est une alternative à la gorge 30 représentée sur la figure 2, pour faciliter le découpage de la languette 20 au niveau de son rattachement avec le rebord 16 de l'aile latérale 14.

Le conduit de câblage son l'invention peut être réalisé d'une seule pièce par moulage ou par extrusion d'une matière plastique ou d'un composite ou encore en métal pour certains modes de l'invention.

## Revendications

1. Conduit de câblage comportant, suivant une section transversale en forme de U, un fond (12) et deux ailes latérales (14), au moins une des deux ailes latérales (14) comprenant un rebord (16) rattaché audit fond (12), et au moins une languette (20) s'élevant à partir dudit rebord (16), ledit rebord (16) comportant une zone de moindre résistance, **caractérisé en ce que** ladite zone de moindre résistance s'étend sensiblement au droit de ladite languette (20) et au moins en partie à proximité de la jonction entre ledit rebord (16) et ladite languette (20).

2. Conduit de câblage selon la revendication 1, **caractérisé en ce que** ladite zone de moindre résistance du rebord (16) comporte un évidement (24) réalisé sur une partie au moins de l'épaisseur du rebord (16) de l'aile latérale (14).

3. Conduit de câblage selon la revendication 1 ou 2, **caractérisé en ce que** ladite zone de moindre résistance du rebord (16) comporte une gorge (26) s'étendant en direction du fond (12) et sensiblement perpendiculairement à ce dernier.

4. Conduit de câblage selon l'une quelconque des revendications 1 à 3, **caractérisé en ce que** ladite zone de moindre résistance du rebord (16) comporte une ligne de perforations (24, 26) espacées les unes des autres, cette ligne s'étendant en direction du fond (12) et sensiblement perpendiculairement à ce dernier.

5. Conduit de câblage selon l'une quelconque des revendications 1 à 4, **caractérisé en ce que** ledit fond (12) comporte, transversalement et sensiblement au droit de ladite languette (20), une zone de moindre résistance s'étendant sur une partie au moins dudit fond (12).

6. Conduit de câblage selon la revendication 5, **caractérisé en ce que** ladite zone de moindre résistance du fond (12) comporte une rainure (28).

7. Conduit de câblage selon la revendication 5 ou 6, **caractérisé en ce que** ladite zone de moindre résistance du fond (12) comporte un alignement de perforations (28a) espacées les unes des autres.

8. Conduit de câblage selon l'une quelconque des revendications 5 à 7, **caractérisé en ce que** la zone de moindre résistance du fond (12) rejoint la zone de moindre résistance du rebord (16) au niveau de l'intersection entre le fond (12) et le rebord de l'aile latérale (14).

9. Conduit de câblage selon l'une quelconque des revendications 1 à 8, **caractérisé en ce que** ladite zone de moindre résistance du rebord (16) se prolonge sur la languette (20).

10. Conduit de câblage selon la revendication 9, **caractérisé en ce que** ladite zone de moindre résistance du rebord (16) comporte un découpage au contour fermé et réalisé en partie sur le rebord (16) de l'aile latérale (14) et en partie sur la languette (20).

11. Conduit de câblage selon la revendication 10, **caractérisé en ce que** ledit contour est en forme de losange, une première diagonale de ce losange étant sensiblement alignée avec une médiane M de ladite languette (20), la deuxième diagonale de ce losange étant sensiblement alignée avec un bord (18) du rebord (16) de l'aile latérale (14).

12. Conduit de câblage selon la revendication 10 ou 11, **caractérisé en ce que** la languette (20) comporte, sensiblement dans le prolongement d'un bord (18) dudit rebord (16), une gorge (30) reliant le découpage et une arête d'intersection de ladite languette (20) avec ledit rebord (16) de l'aile latérale (14).

13. Conduit de câblage selon l'une quelconque des revendications 1 à 12, **caractérisé en ce que** la languette (20) comporte au moins un découpage en biseau (32) au niveau de son rattachement avec le rebord (16) de l'aile latérale (14).

## Patentansprüche

1. Verdrahtungskanal, der in einem U-förmigen Querschnitt einen Boden (12) und zwei Seitenwände (14) umfasst, wobei wenigstens eine der beiden Seitenwände (14) einen mit dem Boden (12) verbundenen Rand (16) aufweist und sich wenigstens ein Steg (20) vom Rand (16) ausgehend erstreckt, wobei der Rand (16) einen Bereich mit geringerer Festigkeit aufweist,
**dadurch gekennzeichnet, dass** der Bereich mit geringerer Festigkeit im Wesentlichen gegenüber dem Steg (20) und wenigstens teilweise in der Nähe der Verbindung zwischen dem Rand (16) und dem Steg (20) verläuft.

2. Verdrahtungskanal nach Anspruch 1,
**dadurch gekennzeichnet, dass** der Bereich geringerer Festigkeit des Rands (16) eine Aussparung (24) aufweist, die über wenigstens einen Teil der Dicke des Rands (16) der Seitenwand (14) ausgeführt ist.

3. Verdrahtungskanal nach Anspruch 1 oder 2,
**dadurch gekennzeichnet, dass** der Bereich geringerer Festigkeit des Rands (16) eine Nut (26) aufweist, die in Richtung des Bodens (12) und im Wesentlichen senkrecht zu diesem verläuft.

4. Verdrahtungskanal nach einem der Ansprüche 1 bis 3,
**dadurch gekennzeichnet, dass** der Bereich geringerer Festigkeit des Rands (16) eine Linie mit voneinander beabstandeten Lochungen (24, 26) aufweist, wobei diese Linie in Richtung des Bodens (12) und im Wesentlichen senkrecht zu diesem verläuft.

5. Verdrahtungskanal nach einem der Ansprüche 1 bis 4,
**dadurch gekennzeichnet, dass** der Boden (12) querlaufend und im Wesentlichen gegenüber dem Steg (20) einen Bereich mit geringerer Festigkeit aufweist, der sich wenigstens über einen Teil des Bodens (12) erstreckt.

6. Verdrahtungskanal nach Anspruch 5,
**dadurch gekennzeichnet, dass** der Bereich geringerer Festigkeit des Bodens (12) eine Rille (28) aufweist.

7. Verdrahtungskanal nach Anspruch 5 oder 6,
**dadurch gekennzeichnet, dass** der Bereich geringerer Festigkeit des Bodens (12) eine fluchtende Anordnung voneinander beabstandeter Lochungen (28a) aufweist.

8. Verdrahtungskanal nach einem der Ansprüche 5 bis 7,
**dadurch gekennzeichnet, dass** der Bereich geringerer Festigkeit des Bodens (12) mit dem Bereich geringerer Festigkeit des Rands (16) am Schnittpunkt zwischen dem Boden (12) und dem Rand der Seitenwand (14) zusammentrifft.

9. Verdrahtungskanal nach einem der Ansprüche 1 bis 8,
**dadurch gekennzeichnet, dass** sich der Bereich geringerer Festigkeit des Rands (16) auf dem Steg (20) fortsetzt.

10. Verdrahtungskanal nach Anspruch 9,
**dadurch gekennzeichnet, dass** der Bereich geringerer Festigkeit des Rands (16) einen Ausschnitt mit geschlossenem Umriss aufweist, der teils auf dem Rand (16) der Seitenwand (14) und teils auf dem Steg (20) ausgeführt ist.

11. Verdrahtungskanal nach Anspruch 10,
**dadurch gekennzeichnet, dass** der Umriss rautenförmig ist, wobei eine erste Diagonale der Raute im Wesentlichen mit der Mittellinie M des Stegs (20) fluchtend angeordnet ist, wobei die zweite Diagonale der Raute im Wesentlichen mit einer Kante (18) des Rands (16) der Seitenwand (14) fluchtend angeordnet ist.

12. Verdrahtungskanal nach Anspruch 10 oder 11,
**dadurch gekennzeichnet, dass** der Steg (20) im Wesentlichen in der Verlängerung einer Kante (18) des Rands (16) eine Nut (30) aufweist, die den Ausschnitt und eine Schnittkante des Stegs (20) mit dem Rand (16) der Seitenwand (14) verbindet.

13. Verdrahtungskanal nach einem der Ansprüche 1 bis 12,
**dadurch gekennzeichnet, dass** der Steg (20) wenigstens einen abgeschrägten Ausschnitt (32) in Höhe seiner Verbindung mit dem Rand (16) der Seitenwand (14) aufweist.

## Claims

1. A cable duct including, in a U-shaped cross section, a base (12) and two side wings (14), wherein at least one of the two side wings (14) comprises a border (16) attached to the said base (12), and at least one tongue (20) rises from the said border (16), wherein the said border (16) includes a weaker region, **characterised in that** the said weaker region is substantially facing the said tongue (20) and at least partly in the vicinity of the join between the said border (16) and the said tongue (20).

2. A cable duct according to Claim 1, **characterised in that** the said weaker region of the border (16) includes a recess (24) formed over at least part of the thickness of the border (16) of the side wing (14).

3. A cable duct according to Claim 1 or 2, **characterised in that** the said weaker region of the border (16) includes a channel (26) extending in the direction of the base (12) and substantially perpendicular to the latter.

4. A cable duct according to any of Claims 1 to 3, **characterised in that** the said weaker region of the border (16) includes a line of perforations (24, 26) spaced from one another, wherein this line extends in the direction of the base (12) and substantially perpendicular to the latter.

5. A cable duct according to any of Claims 1 to 4, **characterised in that** the said base (12) includes, transversely and substantially facing the said tongue (20), a weaker region extending over at least part of the said base (12).

6. A cable duct according to Claim 5, **characterised in that** the said weaker region of the base (12) includes a groove (28).

7. A cable duct according to Claim 5 or 6, **characterised in that** the said weaker region of the base (12) includes aligned perforations (28a) which are spaced from one another.

8. A cable duct according to any of Claims 5 to 7, **characterised in that** the weaker region of the base (12) joins the weaker region of the border (16) at the point where the base (12) intersects with the border of the side wing (14).

9. A cable duct according to any of Claims 1 to 8, **characterised in that** the said weaker region of the border (16) is prolonged over the tongue (20).

10. A cable duct according to Claim 9, **characterised in that** the said weaker region of the border (16) includes a cutout having a closed outline and formed in part in the border (16) of the side wing (14) and in part in the tongue (20).

11. A cable duct according to Claim 10, **characterised in that** the said outline is in the shape of a lozenge, wherein a first diagonal of this lozenge is substantially aligned with a centre line M of the said tongue (20), and wherein the second diagonal of this lozenge is substantially aligned with an edge (18) of the border (16) of the side wing (14).

12. A cable duct according to Claim 10 or 11, **characterised in that** the tongue (20) includes, substantially along a line that prolongs an edge (18) of the said border (16), a channel (30) that connects the cutout and a line of intersection between the said tongue (20) and the said border (16) of the side wing (14).

13. A cable duct according to any of Claims 1 to 12, **characterised in that** the tongue (20) includes at least one wedge-shaped cutout (32) at the point where it is attached to the border (16) of the side wing (14).
